(19) Europäisches Patentamt / European Patent Office / Office européen des brevets

(11) **EP 3 467 029 B1**

(12) **EUROPEAN PATENT SPECIFICATION**

(45) Date of publication and mention
of the grant of the patent:
**09.06.2021 Bulletin 2021/23**

(21) Application number: **17806885.4**

(22) Date of filing: **12.04.2017**

(51) Int Cl.:
*C08L 65/00* (2006.01)    *C08K 9/06* (2006.01)
*C08K 7/14* (2006.01)    *C08G 61/12* (2006.01)
*C08G 75/02* (2016.01)    *C08L 81/02* (2006.01)

(86) International application number:
**PCT/KR2017/003949**

(87) International publication number:
**WO 2017/209392 (07.12.2017 Gazette 2017/49)**

(54) **POLYARYLENE SULFIDE RESIN COMPOSITION HAVING EXCELLENT DUCTILITY AND DIMENSIONAL STABILITY**

POLYARYLENSULFIDHARZZUSAMMENSETZUNG MIT HERVORRAGENDER DUKTILITÄT UND DIMENSIONSSTABILITÄT

COMPOSITION DE RÉSINE DE SULFURE DE POLYARYLÈNE AYANT UNE EXCELLENTE DUCTILITÉ ET UNE EXCELLENTE STABILITÉ DIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2016 KR 20160067040**

(43) Date of publication of application:
**10.04.2019 Bulletin 2019/15**

(73) Proprietor: **SK Chemicals Co., Ltd.
Gyeonggi-do (KR)**

(72) Inventors:
• **KIM, Hae-ri
Seongnam-si
Gyeonggi-do 13504 (KR)**
• **SHIN, Jong-Wook
Suwon-si
Gyeonggi-do 16316 (KR)**
• **AHN, Byung-woo
Incheon 21931 (KR)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
EP-A1- 0 401 502        EP-A2- 0 316 078
EP-A2- 0 449 074        EP-A2- 0 449 074
WO-A1-2015/020142    KR-A- 20160 042 939
KR-U- 19980 027 827    US-A- 5 194 506
US-A1- 2002 161 172    US-A1- 2002 161 172
US-A1- 2006 025 632

## Description

### Technical Field

The present invention relates to a polyarylene sulfide resin composition which has excellent ductility and dimensional stability, and is suitable for preparing thin films.

### Background Art

Polyphenylene sulfide (also, referred to as "PPS") is divided into linear and branched PPS and has different advantages and disadvantages depending on the structure. Linear PPS has high ductility due to the flexibility of its main chain, although its dimensional stability as compared with branched PPS. Meanwhile, there are two types of branched PPS. One of which is prepared by forming braches from a main chain during polymerization, and the other branched PPS is produced by thermally oxidizing linear PPS. The branched PPS has low ductility but superior dimensional stability and creep resistance as compared to linear PPS.

Meanwhile, according to the weight reduction trend in the automobile field, the thickness of the injection molded article has gradually thinned whereas improvement in strength has been demanded (*see* Korean Laid-Open Patent Publication No. 2005-0023929 and Korean Patent No. 10-0444618). Further, in the field of electric and electronic devices, thin film moldability has been demanded due to their miniaturization and integration.

EP 401 502 A1 discloses a composition comprising a poly(arylene sulfide) resin, glass and epoxisilane.

WO 2015/020142 A1 discloses a resin composition containing a polyarylene sulfide resin, with which the amount of gases produced by heat for the purposes of molding or the like can be reduced and which is obtained by a method involving melt polymerization of a diiodo aromatic compound and unit sulfur.

EP 449 074 A2 discloses a composition comprising poly(arylene sulfide), at least one epoxysilane and continuous glass filaments.

US 2002/0161172 A1 discloses a polyarylene sulfide resin with a certain degree of branching of the polyarylene sulfide.

US 5,194,506 discloses a composition comprising:

> (a) polyethylene terephthalate;
> (b) filier;
> (c) an arylene sulfide copolymer having from about 1 to about 25 mole percent of at least one meta-substituted dihalo-aromatic comonomer;
> (d) an aliphatic polyester having a number average molecular weight in the range from about 7,500 to about 20,000 and which is a condensation product of an alkanedioic acid containing from 8 to about 12 carbon atoms per molecule and an alkanediol containing from 2 to about 5 carbon atoms per molecule;
> (e) a metal salt of an ionic hydrocarbon copolymer of an alpha-olefin containing from 2 to about 5 carbon atoms per molecule and an alpha,beta-ethylenically unsaturated carboxylic acid containing from 3 to about 5 carbon atoms per molecule in which co-polymer the neutralized anionic carboxyl groups are associated with cations of said metal, said co-polymer having a number average molecular weight in excess of about 3,000 prior to neutralization, said metal being selected from the group consisting of sodium and potassium; and
> (f) an antioxidant.

EP 316 078 A2 discloses a process for producing a copoly(arylene sulfide) corresponding to the structure

$$[(-A-S-)_{1-x}(-A-S-S-)_x]_n$$

wherein A is a divalent substituted or unsubstituted aromatic radical, x is in the range of 0.5 to 0.001 and *n* is at least 200, comprising reacting a mixture of a diiodoaromatic compound and elemental sulfur at a polymer producing temperature.However, when the conventional PPS is subjected to thin film molding, a thin film prepared from the branched PPS is easily brittle due to its low ductility, and thus, the thin film molding is limited. For this reason, linear PPS having high ductility is used for the thin film molding. However, when linear PPS is subjected to thin film molding, the dimensional stability of the molded article decreases and the reliability of physical properties such as chemical resistance and creep resistance is reduced. In addition, when linear PPS is used for injection molding requiring a high shear rate, thin film formation by injection molding becomes difficult.

**Disclosure of Invention**

**Technical Problem**

Accordingly, an object of the present invention is to provide a polyarylene sulfide (also, referred to as "PAS") resin composition having improved ductility and dimensional stability.

Another object of the present invention is to provide a molded article prepared by molding the resin composition.

**Solution to Problem**

To achieve the above objects, the present invention provides a resin composition as defined in claim 1.

In addition, the present invention provides a molded article prepared by molding the resin composition.

**Advantageous Effects of Invention**

The resin composition according to the present invention has respective advantages of linear PPS and branched PPS, and thus has excellent dimensional stability and creep resistance as well as improved ductility. Therefore, the above resin composition can be widely used in various fields such as manufacturing automobiles, electric and electronic parts which require excellent ductility and dimensional stability.

**Best Mode for Carrying out the Invention**

The present invention provides a resin composition as defined in claim 1.

The value $\alpha$ in the Mark-Houwink equation (Equation 2 below) indicates a branching degree of the polymer. If $\alpha$ is close to 1, a polymer has linear PPS property, and if $\alpha$ is close to 0, the polymer has branched PPS property.

$$[\text{Equation 2}]$$

$$[\eta] = K \times M^{\alpha}$$

wherein the $\eta$ is an intrinsic viscosity, M is a molecular weight, and K is a constant.

According to the present invention, the PAS may have $\alpha$ of 0.4 to 0.7, 0.45 to 0.65, or 0.5 to 0.6.

The PAS may have a melting point of about 265 to 290°C, about 270 to 285°C, or about 275 to 283°C.

The PAS may have a number average molecular weight of 5,000 to 50,000, 8,000 to 40,000, or 10,000 to 30,000, and a polydispersity, which is defined as a ratio of the weight average molecular weight to the number average molecular weight, may be about 2.0 to 4.5, about 2.0 to about 4.0, or about 2.0 to 3.5.

The PAS may have a melt viscosity of 10 to 50,000 poise, 100 to 20,000 poise, or 300 to 10,000 poise as measured at 300°C.

The preparation method of the PAS is not particularly limited as long as it satifies the above-mentioned physical properties. For example, reactants comprising a diiodo aromatic compound and a sulfur element may be prepared by melt polymerization.

The diiodo aromatic compound for use in the melt polymerization may be at least one selected from the group consisting of diiodobenzene (DIB), diiodonaphthalene, diiodobiphenyl, diiodobisphenol, and diiodobenzophenone, but is not limited thereto. Also, the diiodo aromatic compound bonded by a substituent such as an alkyl group, a sulfone group, or the like, and a diiodo aromatic compound in which an oxygen or nitrogen atom is contained in the aromatic group may be used. Further, the diiodo aromatic compound has various isomers of the diiodo compound according to the position to which an iodine atom is attached, and among these isomers, a compound in which an iodine atom is attached to the para position such as para-diiodobenzene (pDIB), 2,6-diiodonaphtalene, or p,p'-diiodobiphenyl is more suitable.

The form of a sulfur element reacting with the diiodo aromatic compound is not particularly limited. Generally, the sulfur element exists in a ring form in which 8 atoms are linked (cyclooctasulfur, $S_8$) at room temperature, and any other commercially available sulfur in a solid or liquid state not having the above structure may also be used without particular limitation.

The reactant may further comprise a branch agent. Specifically, the branch agent may be a triiodo aromatic compound, a diiodo aromatic compound in which the position of iodine atom is ortho or meta, or a combination thereof.

For example, the triiodo aromatic compound may be at least one selected from the group consisting of triiodobenzene (TIB), triiodonaphthalene, triiodobiphenyl, triiodobisphenol, triiodophenyldisulfide, and triiodobenzophenone, but is not limited thereto. In addition, a triiodo aromatic compound bonded by a substituent such as an alkyl group, a sulfone group, or the like, and a triiodo aromatic compound in which an oxygen or nitrogen atom is contained in the aromatic group may be used.

The diiodo aromatic compound in which an iodine atom is bonded at the ortho or meta position may be an isomer in which the iodine atom is bonded at the ortho or meta position among the diiodo aromatic compounds selected from the group consisting of diiodobenzene, diiodonaphthalene, diiodobiphenyl, diiodobisphenol, diiodopheyldisulfide and diiodobenzophenone, but is not limited thereto. In addition, it may be an isomer of a diiodo aromatic compound bonded by a substituent such as an alkyl group, a sulfone group, or the like, and a diiodo aromatic compound in which an oxygen or nitrogen atom is contained in the aromatic group.

More specifically, the branch agent may be selected from triiodobenzene, triiodobiphenyl, ortho-diiodobenzene (o-DIB), meta-diiodobenzene (m-DIB) and a combination thereof.

The reactant may further comprise a polymerization initiator, a stabilizer, or a mixture thereof. Specifically, the polymerization initiator may comprise at least one selected from the group consisting of 1,3-diiodo-4-nitrobenzene, mercaptobenzothiazole, 2,2'-dithiobenzothiazole, cyclohexyl-benzothiazole sulfenamide, and butyl-benzothiazole sulfenamide, but is not limited thereto. Also, the stabilizer is not particularly limited so long as it is commonly used in the polymerization reaction of resins.

Meanwhile, during the melt polymerization of the reactants, a polymerization terminator may be added. The polymerization terminator is not particularly limited as long as it is a compound capable of stopping the polymerization by removing the iodine group contained in the polymer to be manufactured. Specifically, polymerization terminator may be at least one selected from the group consisting of diphenyls, benzophenones, monoiodoaryls, benzothiazoles, benzothiazole sulfenamides, thiurams, dithiocarbamates. More specifically, polymerization terminator may be at least one selected from the group consisting of diphenyl sulfide, diphenyl ether, dibenzothiazole disulfide, iodobiphenyl, iodophenol, iodoaniline, iodobenzophenone, 2-mercaptobenzothiazole, 2,2'-dithiobisbenzothiazole, N-cyclohexylbenzothiazole-2-sulfenamide, 2-morpholinothiobenzothiazole, N,N-dicyclohexylbenzothiazole-2-sulfenamide, tetramethylthiuram monosulfide, tetramethylthiuram disulfide, zinc dimethyldithiocarbamate, zinc diethyldithiocarbamate, and diphenyl disulfide.

Meanwhile, the addition timing of the polymerization terminator may be determined in consideration of the target viscosity or the target molecular weight of the PAS. Specifically, the polymerization terminator may be added at a point when 70 to 100 wt% of the diiodo aromatic compound contained in the initial reactants are reacted and consumed.

The melt polymerization reaction condition as described above is not particularly limited as long as the polymerization of the reactants comprising the diiodo aromatic compound and the sulfur compound can be initiated. For example, the melt polymerization may be carried out under elevated temperature and reduced pressure conditions. Specifically, the temperature elevation and pressure reduction was performed by changing initial reaction conditions of a temperature of 180 to 250°C and a pressure of 50 to 450 torr to final reaction conditions of 270 to 350°C and 0.001 to 20 torr for one (1) to thirty (30) hours. More specifically, the polymerization may be carried out with final reaction conditions of about 280 to 300°C and about 0.1 to 1 torr.

Meanwhile, the preparation method of PAS may further comprise a step of melt blending reactants containing a diiodo aromatic compound and a sulfur prior to the melt polymerization. Such melt blending is not particularly limited as long as the mixture can be melt mixed. For example, it may be carried out at a temperature of 130 to 200°C, specifically 160 to 190°C. When the melt blending step is carried out prior to the melt polymerization, the melt polymerization may be more easily carried out.

According to an embodiment of the present invention, a melt polymerization for preparing PAS may be carried out in the presence of a nitrobenzene-based catalyst. Also, in case that the melt blending step is further included prior to the melt polymerization reaction as described above, the nitrobenzene-based catalyst may be added in the melt blending step. Examples of the nitrobenzene-based catalyst may include, but not limited to, 1,3-diiodo-4-nitrobenzene or 1-iodo-4-nitrobenzene.

The glass fiber serves to improve heat resistance and mechanical strength of the resin composition. The glass fiber may have an average diameter of 6 to 15 μm and an average length of 2 to 5 mm. Specifically, the glass fiber may have an average diameter of 8 to 12 μm and an average length of 3 to 5 mm.

The glass fiber may be surface-treated by a silane having an epoxy group, an amino group or both. In case that the surface-treated glass fiber is used, the interfacial adhesion between the PAS and the glass fiber may be improved. Specifically, the glass fiber may be an alumino-borosilicate glass fiber.

The compatibilizer is a physical property enhancer which improves the compatibility between PAS and a glass fiber to improve the interfacial adhesion of the resin composition. Specifically, the compatibilizer may be a silane-based compound. The silane-based compound may be selected from the group consisting of an epoxy silane, a mercaptosilane, an amino silane, and a combination thereof.

Further, the compatibilizer may be a dry silane. The dry silane is prepared by impregnating an inorganic substance containing micropores with a liquid silane. The amount of the silane contained in the dry silane may be 50 to 80 wt%, specifically 60 to 75 wt%, based on the total weight of the dry silane. The liquid silane may be selected from the group consisting of an epoxy silane, a mercaptosilane, an amino silane, and a combination thereof.

The resin composition may comprise 40 to 70 wt% of PAS, 20 to 60 wt% of a glass fiber, and 0.01 to 1.5 wt% of a compatibilizer. Specifically, the resin composition may comprise 50 to 65 wt% of PAS, 20 to 55 wt% of a glass fiber, and 0.05 to 1.5 wt% of a compatibilizer. More specifically, the resin composition may comprise 55 to 65 wt% of PAS, 30 to 55 wt% of a glass fiber, and 0.05 to 1.0 wt% of a compatibilizer.

The resin composition may have 0.9 to 1.0 of a molding shrinkage ratio represented by the following Equation (1) with regard to the injection molded square specimen.

[Equation 1]

$$\text{Molding shrinkage ratio} = \text{transverse direction (TD) length/ longitudinal direction (MD) length}$$

The resin composition may further comprise an additive selected from a heat stabilizer, a lubricant, an antistatic agent, a nucleating agent, a slipping agent, a pigment and a combination thereof.

The resin composition of the present invention has respective advantages of linear PPS and branched PPS, and thus has improved dimensional stability and creep resistance as well as improved ductility. Therefore, the above resin composition can be widely used in various fields such as automobiles, electric and electronic parts requiring excellent ductility and dimensional stability.

The present invention also provides a molded article prepared by molding the resin composition as described above.

The molded article may be an automobile part, an electric part, or an electronic part.

The molded article may be manufactured by molding the resin composition of the present invention by a method known in the art such as biaxial extrusion, injection molding, etc. The molded article may be in various forms such as, a film, a sheet, a thin film, and a fiber. In addition, the molded article may be an injection molded article, an extrusion molded article, a thin film molded article or a blow molded article.

Specifically, when the molded article is prepared by injection molding, the mold temperature may be about 130°C or higher. In case that the molded articles are in film or sheet forms, they may be manufactured as various films or sheets by a non-orientation method, an uniaxial orientation method, a biaxial orientation method, and the like. In case that the molded articles are fibers, they may be various kinds of fibers such as a non-drawn fiber, a drawn fiber, or an ultra-drawn fiber, etc., and may be used as a fabric, knitted goods, a non-woven fabric (spunbond, meltblow, or staple), a rope, or a net. The molded articles may be used as electric or electronic parts such as computer parts, building materials, automobile parts, machine parts, basic commodities, coatings in contact with chemicals, an industrial fiber requiring chemical resistance, etc.

**Mode for the Invention**

Hereinafter, the present invention is explained in detail by Examples as below. The following Examples are intended to further illustrate the present invention without limiting its scope.

**Preparation Example 1: Preparation of PPS 1**

5,130 g of p-iodobenzene (p-DIB) and 450 g of sulfur were put into a 5 L reactor equipped with a thermocouple capable of measuring the internal temperature of the reactor and a vacuum line capable of nitrogen purging and vacuumizing. The reactor was heated to 180°C to completely melt and mix p-DIB and sulfur, and then the polymerization reaction was carried out under the condition of the stepwise temperature increase and pressure reduction. Specifically, the temperature increase and pressure reduction were performed by changing an initial reaction condition, i.e., a temperature of 220°C and a pressure of 350 torr to a final reaction condition, i.e., 300°C and 0.6 to 0.9 torr, while feeding 19 g of sulfur seven times. The degree of progress of the polymerization reaction was calculated as a relative ratio of the current viscosity to the target viscosity by the formula"(current viscosity/ target viscosity) $\times$ 100%". The target viscosity was 2,000 poise, and the current viscosity was measured by taking a sample during the polymerization and measuring it with a viscometer. When the polymerization reaction proceeded to 80%, 35 g of diphenyl disulfide was added as a polymerization terminator and the reaction was carried out for additional 1 hour. Thereafter, vacuum was gradually applied at 0.1 to 0.5 torr to reach a target viscosity and then the reaction was terminated to produce polyphenylene sulfide resin 1 (PPS 1). The resulting resin was made into the form of pellets using a small-sized strand cutter.

With result to the PPS 1, the melting point (Tm), number average molecular weight (Mn), polydispersity index (PDI), melt viscosity (MV), branch ratio were measured in the following manner. As a result, PPS 1 had a melting point of 280°C, an Mn of 18,100, PDI of 2.8, a melt viscosity of 2,050 poise, and a branch ratio of 0.71.

Melting point

Using a differential scanning calorimeter (DSC), the melting point was measured while the temperature was raised from 30 to 320°C at a speed of 10°C/minute, cooled to 30°C, and then raised again from 30 to 320°C at a speed of 10°C/minute.

Number average molecular weight (Mn) and polydispersity index (PDI)

A sample was prepared by dissolving the PPS resin in 1-chloronaphthalene to obtain the PPS concentration of 0.4 wt% and stirred at 250°C for 25 minutes. Subsequently, the sample was introduced at a flow rate of 1 mL/minute in the column of a high temperature gel permeation chromatography (HT-GPC) system (210°C), PPSs having different molecular weights were sequentially separated, and the intensities corresponding to the molecular weight of the separated PPS were measured by using an RI detector. After determining a calibration curve with a standard specimen (polystyrene) whose molecular weight was known, the number average molecular weight (Mn) and polydispersity index (PDI) of the PPS resin were calculated.

Melt viscosity (MV)

Melt viscosity was measured at 300°C with a rotating disk viscometer. In the frequency sweep method, the angular frequency was measured from 0.6 rad/s to 500 rad/s, and the viscosity at 1.84 rad/s was defined as the melt viscosity.

Branch ratio ($\alpha$)

The PPS resin was added to 1-chloronaphthalene to obtain the PPS concentration of 0.4% (w/v), and stirred and dissolved at 250°C for 30 minutes, and then filtered with a 2 $\mu$m porous stainless steel (SUS) filter. The intrinsic viscosity and molecular weight were measured using a triple system detector (RI, Viscometer, Light Scatter 15° and 90°) of high temperature gel permeation chromatography (210°C; Model PL-220) of Agilent Co., and then, Mark-Houwink Plot was indicated and the branch ratio ($\alpha$) was calculated by using the average slope. The value $\alpha$ indicates the degree of branching of a polymer. If $\alpha$ is close to 1, a polymer has linear PPS property, and if $\alpha$ is close to 0, a polymer has branched PPS property.

Preparation Example 2: Preparation of PPS 2

Except that the target viscosity was 2,000 poise, and 5,080 g of para-diiodobenzene (p-DIB), 51 g of meta-diiodobenzene (m-DIB) and 450 g of sulfur were used as raw materials, PPS 2 was prepared by the same method as in Preparation Example 1. PPS 2 had an MV of 2,130 poise, a melting point of 279°C, an Mn of 17,500, a PDI of 2.8, and a branch ratio of 0.56.

**Preparation Example 3: Preparation of PPS 3**

Except that the target viscosity was 2,000 poise, and triiodobenzene was used instead of meta-diiodobenzene, PPS 3 was prepared by the same method as in Preparation Example 2. PPS 3 had an MV of 2,070 poise, a melting point of 279°C, an Mn of 17,700, a PDI of 2.8, and a branch ratio of 0.55.

**Preparation Example 4: Preparation of PPS 4**

Except that the target viscosity was 600 poise, and 5,030 g of p-diiodobenzene (p-DIB), 103 g of meta-diiodobenzene and 450 g of sulfur were used as raw materials, PPS 4 was prepared by the same method as in Preparation Example 1. PPS 4 had an MV of 700 poise, a melting point of 279°C, an Mn of 11,400, a PDI of 2.8, and a branch ratio of 0.53.

**Preparation Example 5: Preparation of PPS 5**

Except that the target viscosity was 3,750 poise, and 5,100 g of para-diiodobenzene (p-DIB), 26 g of meta-diiodobenzene and 450 g of sulfur were used as raw materials, PPS 5 was prepared by the same method as in Preparation Example 1. PPS 5 had an MV of 3,850 poise, a melting point of 280°C, an Mn of 19,050, a PDI of 2.8, and a branch ratio of 0.58.

**Preparation Example 6: Preparation of PPS 6**

Except that the target viscosity was 2,000 poise, and 4,870 g of para-diiodobenzene (p-DIB), 257 g of triiodobenzene and 450 g of sulfur were used as raw materials, PPS 6 was prepared by the same method as in Preparation Example 1. PPS 6 had an MV of 2,260 poise, a melting point of 277°C, an Mn of 18,750, a PDI of 2.8, and a branch ratio of 0.31.

**Example 1: Preparation of resin composition**

In a biaxial-screw extruder, 59.7 wt% of PPS 1 prepared in Preparation Example 1 and 40 wt% of a glass fiber surface-treated with an epoxy silane (Owens Corning, FT-523) were blended to prepare a resin composition.
The biaxial screw extruder manufactured by SM platek having a diameter of 40 mm and L/D of 44 was used. The process conditions were a screw of 250 rpm, a feed rate of 40 kg/hour, a barrel temperature of 280°C to 300°C and a torque of 60%.

**Examples 2 to 6 and Comparative Examples 1 to 6: Preparation of resin composition**

Except that the components and their contents as shown in Tables 2 and 3 were used, a PPS resin composition was prepared by the same method as in Example 1.
The components used in Examples 1 to 6 and Comparative Examples 1 to 6 are shown in Table 1 below.

[Table 1]

| Item | Property |
|---|---|
| PPS 1 | MV: 2,050 poise, Tm: 280°C, Mn: 18,100, $\alpha$: 0.71 |
| PPS 2 | MV: 2,130 poise, Tm: 279°C, Mn: 17,500, $\alpha$: 0.56 |
| PPS 3 | MV: 2,070 poise, Tm: 279°C, Mn: 17,700, $\alpha$: 0.55 |
| PPS 4 | MV: 700 poise, Tm: 279°C, Mn: 11,400, $\alpha$: 0.53 |
| PPS 5 | MV: 3,850 poise, Tm: 280°C, Mn: 19,050, $\alpha$: 0.58 |
| PPS 6 | MV: 2,260 poise, Tm: 277°C, Mn: 18,750, $\alpha$: 0.31 |
| PPS 7 | Solvay P-6, MI(380g/10min, @316°C, 5kg), Tm: 281°C, $\alpha$: 0.28 |
| PPS 8 | Celanese 0205P4, MV: 700 poise, Tm: 280°C, $\alpha$: 0.73 |
| Glass fiber | Owens Corning FT-523, diameter: 10$\mu$m, length: 4mm, surface-treated with an epoxy silane |
| Compatibilizer | Momentive A-187, an epoxy silane compound |

[Table 2]

| Item (wt%) | Ex. 1 | Ex. 2 | Ex. 3 | Ex. 4 | Ex. 5 | Ex. 6 |
|---|---|---|---|---|---|---|
| PPS 2 | 60 | 59.7 | - | - | - | 30 |
| PPS 3 | - | - | 59.7 | - | - | 29.7 |
| PPS 4 | - | - | - | 59.7 | - | - |
| PPS 5 | - | - | - | - | 59.7 | - |
| Glass fiber | 40 | 40 | 40 | 40 | 40 | 40 |
| Compatibilizer | - | 0.3 | 0.3 | 0.3 | 0.3 | 0.3 |

[Table 3]

| Item (wt%) | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| PPS 1 | 59.7 | - | - | - | - | - |
| PPS 6 | - | 60 | 59.7 | - | - | - |
| PPS 7 | - | - | - | 60 | 59.7 | - |
| PPS 8 | - | - | - | - | - | 60 |
| Glass fiber | 40 | 40 | 40 | 40 | 40 | 40 |
| Compatibilizer | 0.3 | - | 0.3 | - | 0.3 | - |

**Experimental Example: Verification of physical properties**

The physical properties of the resin compositions prepared in Examples 1 to 6 and Comparative Examples 1 to 6 were measured according to the following methods, and the measurement results were shown in Tables 4 and 5.
First, each resin composition prepared in Examples 1 to 6 and Comparative Examples 1 to 6 was injection-molded at 310°C, to prepare injection-molded specimens.

(1) Tensile strength

The tensile strength of the injection-molded specimen was measured according to the ISO 527.

(2) Tensile elongation

The tensile elongation of the injection-molded specimen was measured according to the ISO 527-1.

(3) Impact strength

According to the ISO 179, the impact strength of the injection-molded specimen having dimension of 80 mm x 10 mm x 4 mm (length x width x thickness) was measured by an un-notch charpy method.

(4) Fracture toughness

The ASTM flexural specimen having a thickness of 0.8 mm was injection-molded and subjected to a flexural test at a speed of 3 mm/min to obtain a stress-strain curve and the area of the stress-strain curve was measured.

(5) Dimensional stability

After preparing the injection-molded specimen having dimensions of 100 mm $\times$ 100 mm $\times$ 3 mm (width x length x thickness), the length in the direction of the resin flow (MD, mold direction, longitudinal direction) and the lengthen the direction perpendicular to the resin flow (TD, transverse direction) were measured using a three dimensional measuring device, to calculate the molding shrinkage ratio (TD/MD). The molding shrinkage ratio closer to 1 indicates a smaller dimensional change with respect to the resin flow direction, and thus excellent dimensional stability.

(6) Flow length

ASTM flexural specimen of 0.8 mm thickness was injection-molded and measured for the length of the injection mold.

[Table 4]

| Item | Unit | Ex. 1 | Ex. 2 | Ex. 3 | Ex. 4 | Ex. 5 | Ex. 6 |
|---|---|---|---|---|---|---|---|
| Tensile strength | kgf/cm$^2$ | 1,750 | 1,930 | 1,920 | 1,730 | 1,950 | 1,890 |
| Tensile elongation | % | 2.0 | 1.9 | 1.9 | 1.6 | 2.0 | 1.9 |

(continued)

| Item | Unit | Ex. 1 | Ex. 2 | Ex. 3 | Ex. 4 | Ex. 5 | Ex. 6 |
|---|---|---|---|---|---|---|---|
| Fracture toughness (0.8mm) | J | 1.61 | 1.63 | 1.61 | 1.50 | 1.67 | 1.64 |
| Tensile strength (un-notched) | $kJ/m^2$ | 44 | 47 | 46 | 38 | 49 | 47 |
| Dimensional stability | TD/MD | 0.93 | 0.97 | 0.96 | 0.96 | 0.96 | 0.95 |
| Flow length | mm | 110 | 103 | 102 | 123 | 100 | 115 |
| Branch ratio of PPS used ($\alpha$) | - | 0.56 | 0.56 | 0.55 | 0.53 | 0.58 | 0.59 |

[Table 5]

| Item | Unit | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Tensile strength | $kgf/cm^2$ | 1,940 | 1,690 | 1,890 | 1,680 | 1,910 | 1,730 |
| Tensile elongation | % | 2.1 | 1.5 | 1.4 | 1.5 | 1.6 | 1.8 |
| Fracture toughness (0.8mm) | J | 1.72 | 1.35 | 1.39 | 1.38 | 1.29 | 1.62 |
| Tensile strength (un-notched) | $kJ/m^2$ | 50 | 45 | 47 | 47 | 50 | 39 |
| Dimensional stability | TD/MD | 0.94 | 0.97 | 0.97 | 0.96 | 0.96 | 0.89 |
| Flow length | mm | 86 | 93 | 87 | 102 | 98 | 83 |
| Branch ratio of PPS used ($\alpha$) | - | 0.71 | 0.31 | 0.31 | 0.28 | 0.28 | 0.73 |

As shown in Tables 4 and 5, Examples 1 to 6 exhibited superior toughness and dimensional stability while exhibiting excellent ductility as compared to Comparative Examples 1 to 6.

Further, Examples 1 to 5 using a single type of the PPS having a branch ratio of 0.5 to 0.6 exhibited superior tensile strength, tensile elongation and toughness as compared to Comparative Examples 2 to 5 employing a single type of the PPS having a branch ratio of less than 0.35.

Furthermore, Examples 1 to 5 using the PPS prepared by the melt polymerization method exhibited superior dimensional stability and flow length as compared to Comparative Example 6 using PPS prepared by the solution polymerization method.

**Claims**

1.  A resin composition comprising polyarylene sulfide having 0.4 to 0.7 of $\alpha$ (branch ratio) in Mark-Houwink equation, a glass fiber and a compatibilizer wherein the polyarylene sulfide is prepared by melt polymerization of reactants comprising a diiodo aromatic compound and a sulfur element, and the reactants further comprise triiodobenzene, triiodobiphenyl, ortho-diiodobenzene, meta-diiodobenzene or a combination thereof.

2.  The resin composition according to claim 1, wherein the polyarylene sulfide has a number average molecular weight of 5,000 to 50,000.

3.  The resin composition according to claim 1, wherein the polyarylene sulfide has a melt viscosity of 10 to 50,000 poise at 300°C.

4. The resin composition according to claim 1, wherein the glass fiber has an average diameter of 6 to 15 $\mu$m and an average length of 2 to 5 mm.

5. The resin composition according to claim 1, wherein the glass fiber is surface-treated with a silane having an epoxy group, an amino group or both.

6. The resin composition according to claim 1, wherein the compatibilizer is a silane-based compound.

7. The resin composition according to claim 6, wherein the silane-based compound is selected from an epoxy silane, a mercaptosilane, an amino silane, and a combination thereof.

8. The resin composition according to claim 1, wherein the resin composition comprises 40 to 70 wt% of the polyarylene sulfide, 20 to 60 wt% of the glass fiber, and 0.01 to 1.5 wt% of the compatibilizer.

9. The resin composition according to claim 1, wherein a molding shrinkage ratio of an injection-molded square specimen of the resin composition as represented by Equation 1 is 0.9 to 1.0.

[Equation 1]

Molding shrinkage ratio = transverse direction (TD) length/ longitudinal direction (MD) length

10. A molded article prepared by molding the resin composition according to any one of claims 1 to 9.

11. The molded article of claim 10, wherein the molded article is an automobile part, an electric part, or an electronic part.

**Patentansprüche**

1. Harzzusammensetzung, die ein Polyarylensulfid mit einem $\alpha$ von 0,4 bis 0,7 (Verzweigungsverhältnis) in der Mark-Houwink-Gleichung, eine Glasfaser und einen Verträglichkeitsvermittler umfasst, wobei das Polyarylensulfid durch Schmelzpolymerisation von Reaktanten, die eine aromatische Diiodverbindung und elementaren Schwefel umfassen, hergestellt wird und die Reaktanten weiterhin Triiodbenzol, Triiodbiphenyl, ortho-Diiodbenzol, meta-Diiodbenzol oder eine Kombination davon umfassen.

2. Harzzusammensetzung gemäß Anspruch 1, wobei das Polyarylensulfid ein Zahlenmittel des Molekulargewichts von 5000 bis 50 000 aufweist.

3. Harzzusammensetzung gemäß Anspruch 1, wobei das Polyarylensulfid eine Schmelzviskosität von 10 bis 50 000 Poise bei 300 °C aufweist.

4. Harzzusammensetzung gemäß Anspruch 1, wobei die Glasfaser einen mittleren Durchmesser von 6 bis 15 $\mu$m und eine mittlere Länge von 2 bis 5 mm aufweist.

5. Harzzusammensetzung gemäß Anspruch 1, wobei die Glasfaser mit einem Silan, das eine Epoxidgruppe, eine Aminogruppe oder beides aufweist, oberflächenbehandelt ist.

6. Harzzusammensetzung gemäß Anspruch 1, wobei der Verträglichkeitsvermittler eine Verbindung auf Silanbasis ist.

7. Harzzusammensetzung gemäß Anspruch 6, wobei die Verbindung auf Silanbasis aus einem Epoxysilan, einem Mercaptosilan, einem Aminosilan und einer Kombination davon ausgewählt ist.

8. Harzzusammensetzung gemäß Anspruch 1, wobei die Harzzusammensetzung 40 bis 70 Gew.-% des Polyarylensulfids, 20 bis 60 Gew.-% der Glasfaser und 0,01 bis 1,5 Gew.-% des Verträglichkeitsvermittlers umfasst.

9. Harzzusammensetzung gemäß Anspruch 1, wobei das Verarbeitungsschwindungsverhältnis eines spritzgegossenen quadratischen Probekörpers der Harzzusammensetzung, wie es durch Gleichung 1 repräsentiert wird, 0,9 bis 1,0 beträgt.

## Gleichung 1

Verarbeitungsschwindungsverhältnis = Länge in Querrichtung (QR)/Länge in Längsrichtung (MR).

**10.** Formkörper, hergestellt durch Formen der Harzzusammensetzung gemäß einem der Ansprüche 1 bis 9.

**11.** Formkörper gemäß Anspruch 10, wobei der Formkörper ein Autoteil, ein elektrisches Teil oder ein elektronisches Teil ist.

**Revendications**

**1.** Composition de résine, comprenant un sulfure de polyarylène ayant un α de 0,4 à 0,7 (rapport de ramification) dans l'équation de Mark-Houwink, une fibre de verre et un agent de compatibilité, dans laquelle ledit sulfure de polyarylène est préparé par polymérisation à l'état fondu de réactifs comprenant un composé diiodo aromatique et du soufre élémentaire, et les réactifs comprennent en outre du triiodobenzène, du triiodobiphényle, du ortho-diiodobenzène, du méta-diiodobenzène, ou une combinaison de ceux-ci.

**2.** Composition de résine selon la revendication 1, dans laquelle ledit sulfure de polyarylène présente un poids moléculaire moyen en nombre de 5000 à 50000.

**3.** Composition de résine selon la revendication 1, dans laquelle ledit sulfure de polyarylène présente une viscosité à l'état fondu de 10 à 50000 Poise à 300 °C.

**4.** Composition de résine selon la revendication 1, dans laquelle ladite fibre de verre présente un diamètre moyen de 6 à 15 μm et une longueur moyenne de 2 à 5 mm.

**5.** Composition de résine selon la revendication 1, dans laquelle la surface de ladite fibre de verre a été traité avec un silane ayant un groupe époxy, un groupe amino, ou les deux.

**6.** Composition de résine selon la revendication 1, dans laquelle ledit agent de compatibilité est un composé à base de silane.

**7.** Composition de résine selon la revendication 6, dans laquelle ledit composé à base de silane est choisi parmi un époxysilane, un mercaptosilane, un aminosilane, et une combinaison de ceux-ci.

**8.** Composition de résine selon la revendication 1, dans laquelle ladite composition de résine comprend 40 à 70 % en poids de sulfure de polyarylène, 20 à 60 % en poids de fibre de verre, et 0,01 à 1,5 % en poids de l'agent de compatibilité.

**9.** Composition de résine selon la revendication 1, dans laquelle le rapport de retrait au moulage d'un échantillon carré moulé par injection de ladite composition de résine, tel que représenté par l'équation 1, est de 0,9 à 1,0 :

## Equation 1

rapport de retrait au moulage = longueur dans la direction transversale (DT)/longueur dans la direction longitudinale (DM).

**10.** Pièce moulée préparée par moulage de la composition de résine selon l'une quelconque des revendications 1 à 9.

11. Pièce moulée selon la revendication 10, dans laquelle ladite pièce moulée est une pièce de voiture, un composant électrique, ou un composant électronique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20050023929
- KR 100444618
- EP 401502 A1
- WO 2015020142 A1
- EP 449074 A2
- US 20020161172 A1
- US 5194506 A
- EP 316078 A2